# EUROPÄISCHE PATENTANMELDUNG

(11) **EP 1 521 395 A1**
(43) Veröffentlichungstag der Anmeldung: **06.04.2005**
(21) Anmeldenummer: 03021963.8
(22) Anmeldetag: 30.09.2003
(51) Int. Cl.: H04L 12/24, H04L 29/06

(54) **Verfahren zur Lizensierung und/oder Zugangsautorisierung für Softwaremodule in einer Vermittlungseinrichtung**

(71) Anmelder: SIEMENS AKTIENGESELLSCHAFT, 80333 München (DE)
(72) Erfinder: Leuschner, Klaus, 85591 Vaterstetten (DE); Schaade, Stephan, 86807 Buchlö (DE)
(74) Vertreter: Berg, Peter, Dipl.-Ing.

(57) **Zusammenfassung**

Verfahren zur Lizenzierung und/oder Zugangsautorisierung für Softwaremodule in einer rechnergesteuerten Vermittlungseinrichtung (1), wobei eine Lizenzdatenbasis (4) verwendet wird, in welcher die Softwaremodule und jeweils diesen zugeordnete Lizenzinformationen gespeichert sind, und eine Konfiguration zumindest eines dieser Softwaremodule eine Interaktion (9) zwischen der Lizenzdatenbasis und einem computerlesbaren Datenträger (10) auslöst, wobei eine Hardwarekenninformation erzeugt wird (13), und die Hardwarekenninformation und die Lizenzinformation des zumindest einen Softwaremoduls vom Vermittlungsrechner über eine Kommunikationsverbindung an einen Lizenzmanager (2) übermittelt wird (6), und der Lizenzmanager eine Lizenzbestätigungsinformation erzeugt und diese an den Vermittlungsrechner rückübermittelt (7,8), wobei die Lizenzbestätigungsinformation im Vermittlungsrechner über die Autorisation des zumindest einen Softwaremoduls entscheidet.

## Beschreibung

### Technisches Gebiet

Die Erfindung bezieht sich auf ein Verfahren zur Lizenzierung und/oder Zugangsautorisierung für Softwaremodule in einer rechnergesteuerten Vermittlungseinrichtung.

### Stand der Technik

In einem Kommunikationsnetz, wie beispielsweise dem Fernsprechnetz, erfolgt die Verbindung zwischen örtlich entfernt liegenden Kommunikationsteilnehmern durch eine abschnittsweise Festlegung von Teilstrecken eines Übertragungsweges. Diese Wegwahl ist zentrale Aufgabe von rechnergesteuerten Vermittlungseinrichtungen. Derartige Vermittlungseinrichtungen werden auch als Vermittlungsrechner, Verbindungsrechner oder Knotenrechner bezeichnet.

In aktuellen Nebenstellennetzen werden rechnergesteuerte Vermittlungseinrichtungen sowohl als herkömmliche Telekommunikationssysteme wie auch als reine IP-System betrieben. Es sind System in unterschiedlichen Größenklassen gebräuchlich, d.h. kleine Nebenstellenanlagen, mit bis zu 15 Nebenstellen, bis hin zu großen Nebenstellenanlagen, mit einigen zehntausend Nebenstellen. Funktion und Dienste von ISDN-Nebenstellenanlagen sind in internationalen Standards der ITU festgelegt.

Jeder Nebenstellenanschluss weist einen durch Leistungsmerkmale vorgegebenen Funktionsumfang auf, welcher im zugeordneten Vermittlungsrechner durch Konfiguration beziehungsweise Administration von Softwaremodulen vorgegeben wird. Diese Konfiguration bzw. Administration kann vom Betreiber eines Nebenstellennetzes veranlasst bzw. selbst durchgeführt werden, indem Verwaltungskommandos der Steuerung Softwaremodule in einer Vermittlungseinrichtung aktivieren.

Leistungsmerkmale gliedern sich je nach Verkehrsart in Leistungsmerkmale für den kommenden Verkehr, für den gehenden Verkehr, für die Leitweglenkung, für den Internetverkehr, für die Gesprächsdatenerfassung, für die Rufumleitung, die Anklopffunktion, für verschiedene mehrsprachige Textausgaben, ISDN-Leistungsmerkmale usw. Jedem dieser Leistungsmerkmale entspricht in der Vermittlungseinrichtung eine bestimmte Funktionskomponente, welche zumeist durch ein Softwaremodul realisiert ist.

Die aktuell verfügbare Funktionalität einer Vermittlungseinrichtung wird durch die aktivierten Software-Module bestimmt. In der Regel erwirbt der Betreiber des Nebenstellennetzes vom Hersteller der Vermittlungseinrichtung eine Nutzungslizenz für diese Softwaremodule.

Da die Anforderung an ein Kommunikationssystem sich an dem durch die Kommunikationsteilnehmer vorgegebenen Bedarf orientieren muss, ist es erforderlich, die Ausbaustufe von Vermittlungseinrichtungen im Netz von Zeit zu Zeit neu zu konfigurieren bzw. administrieren. So kann es beispielsweise erforderlich sein, die maximal mögliche Anzahl von Kommunikationsteilnehmern einer Nebenstellenanlage zu vergrößern, oder neue verbesserte Leistungsmerkmale anzubieten. Diese Anpassung kann dadurch erreicht werden, dass neue Softwaremodule in die Datenbasis der Vermittlungseinrichtung geladen und die Nutzungslizenz des Betreibers entsprechend angepasst wird. Das Laden von neuen Softwaremodulen ist aber mit einem entsprechenden Aufwand verbunden, so dass man seitens der Hersteller der Vermittlungseinrichtungen dazu übergegangen ist, Geräte mit einer vollumfänglichen Anwendungssoftware auszuliefern, wobei die Anwendungssoftware aber nur im Rahmen einer Lizenzvereinbarung genutzt werden darf, die zwischen dem Gerätehersteller und dem Netzbetreiber vereinbart ist. Der Hersteller von Vermittlungseinrichtungen ist dabei bestrebt, dass durch Schutzmechanismen sichergestellt ist, dass sich der tatsächliche Nutzungsumfang nur im Rahmen dieses Lizenzabkommens bewegt und eine missbräuchliche Nutzung weitgehend ausgeschlossen ist.

Aus der Computertechnik sind verschiedene Schutzmechanismen für Softwareprodukte bekannt. Bei Personalcomputern ist es heutzutage üblich, Softwareschutzstecker, sog. Dongle, zu verwenden. Ein Softwareschutzstecker ist ein zusätzliches Hardwareteil und enthält eine eindeutige und unveränderbare Kenninformation. Beim Start der zu schützenden Software führt das Programm eine Abfrage durch und prüft, ob die korrespondierende Kenninformation im Dongle hinterlegt ist. Ist dies der Fall, dann ist die Software auf dem Personalcomputer ablauffähig, andernfalls wird die Ausführung nicht zugelassen. Ein Dongle kann für ein bestimmtes Software-Produkt an einer anderen Rechnereinheit weiter verwendet werden, vorausgesetzt Hardware und Betriebssystem stimmen überein. Werden an einer Rechenanlage mehrere Software-Produkte verwendet, sind jeweils korrespondierende Softwareschutzstecker erforderlich.

Die Verwendung von Softwareschutzstecker bei der Konfiguration beziehungsweise Administration von Vermittlungseinrichtungen ist umständlich und hinsichtlich der Sicherheit problematisch, da das Speichern von digitalen Schlüssel mit einem Softwareschutzstecker nicht vorgesehen ist.

### Darstellung der Erfindung

Der Erfindung liegt die Aufgabe zu Grunde, die Lizenzierung und/oder Zugangsautorisierung für Softwaremodule in einer rechnergesteuerten Vermittlungseinrichtung zu vereinfachen und eine flexible Anpassung an wechselnden Bedarf zu ermöglichen.

Die Lösung der Aufgabe erfolgt durch die Merkmale des Patentanspruchs 1. Auf vorteilhafte Ausgestaltungen der Erfindung nehmen die Unteransprüche Bezug.

Der Hauptaspekt der erfindungsgemäß vorgeschlagenen Lösung besteht darin, Softwaremodule, die in der Vermittlungseinrichtung vollumfänglich bereit gehalten werden, skalierbar, d.h. nur innerhalb eines vorgegebenen Lizenzrahmens, zum Einsatz zu bringen.

Gemäß der Erfindung ist die Verwendung einer Lizenzdatenbasis vorgesehen, in welcher vollumfänglich all jene Softwaremodule gespeichert sind, welche für eine volle Ausbaustufe der Vermittlungseinrichtung erforderliche sind. Die Lizenzdatenbasis kann beispielsweise durch einen herkömmlichen Plattenspeicher, eine Harddisk, realisiert sein. Jedem Softwaremodul ist auf dieser Harddisk eine Lizenzinformation zugeordnet. Wird in Folge einer Konfiguration oder Administration zumindest eines dieser Softwaremodule aktiviert, wird in einem ersten Schritt eine Interaktion zwischen der Lizenzdatenbasis und einem computerlesbaren Datenträger ausgelöst. Ziel dieser Interaktion ist es, die Einmaligkeit zwischen der für die Lizenzdatenbasis verwendeten Harddisk und einer auf einem computerlesbaren Datenträger vorhandenen geheimen Information zu prüfen. Diese Identitätsprüfung kann beispielsweise durch Vergleich zwischen der Harddiskkennnummer und einem auf dem computerlesbaren Datenträger abgelegten geheimen Schlüssels erfolgen. Das Ergebnis dieser Identitätsprüfung ist eine Hardwarekenninformation, aus welcher hervorgeht, ob der Schlüssel und die Speicherhardware zueinander passen. In einem weiteren Schritt wird nun diese Hardwarekennung zusammen mit der Lizenzinformation des zumindest einen Softwaremoduls vom Vermittlungsrechner über eine Kommunikationsverbindung an einen von der Vermittlungsstelle örtlich entfernt liegenden Lizenzmanager übermittelt. Der Lizenzmanager entscheidet über die Autorisation des zumindest einen zu konfigurierenden Softwaremoduls, indem er eine Lizenzbestätigungsinformation erzeugt, die er an die Vermittlungseinrichtung rückübermittelt. Die Kommunikation zwischen der Vermittlungseinrichtung und dem Lizenzmanager kann beispielsweise über eine Telefon- bzw. Fax-Verbindung erfolgen, oder durch Rechnerkommunikation hergestellt werden. Da der Lizenzmanager einerseits Informationen über die Identität der Hardwareplattform und anderseits Informationen über den darauf betrieben Nutzungsumfang von Softwaremodulen vorliegen, ist die Lizenzierung bzw. Zugangsautorisation zu Softwaremodulen auf einfache Weise möglich.

Um Missbrauch weitgehend auszuschließen, wird bei der Interaktion zwischen der Lizenzdatenbasis und dem computerlesbaren Datenträger ein kryptographischer Algorithmus verwendet.

Bevorzugt ist, dass bei der Interaktion zwischen der Lizenzdatenbasis und dem computerlesbaren Datenträger ein an sich bekanntes asymmetrisches Verschlüsselungsverfahren verwendet wird.

Bevorzugter Weise ist der computerlesbare Datenträger als portabler Datenträger ausgebildet. Dadurch kann im Falle eines Hardwareausfalls eine Hauptleiterplatte einfach gewechselt und der portable Datenträger auf der neuen Hauptleiterplatte weiter verwendet werden. Die Vermittlungseinrichtung muss nicht vollständig neu konfiguriert werde. Dies ist von entscheidender Bedeutung, da die Ausfallzeiten einer Vermittlungseinrichtung dadurch wesentlich reduziert werden können.

Der portable Datenträger kann vorteilhaft durch eine Smart-Card, eine Chip-Card oder eine Security-Digital-Multi-Media-Card (SD/MMC) gebildet sein. Verglichen mit einem Softwareschutzstecker sind die oben genannten Karten kostengünstiger. Umgang und Handhabung dieser Karten entspricht weitgehend denen von SIM-Karten, wie sie bei Handys verwendet werden. Jede Karte ist steckbar und kann somit auf einer neuen Vermittlungseinrichtung weiter verwendet werden.

Hinsichtlich der Datensicherheit ist es günstig, wenn die Hardwarekenninformation und die Lizenzinformationen vom Vermittlungsrechner an den Lizenzmanager verschlüsselt übermittelt werden. Der Security-Level ist durch den Funktionsumfang der o.g. Karten skalierbar.

In einer bevorzugten Ausgestaltung ist der Lizenzmanager als Server realisiert, der vom Hersteller der Vermittlungseinrichtung verwaltet wird. Der Server weist eine Lizenzreferenzdatenbasis auf. Diese beinhaltet in Form von Referenzinformationen die von einem Betreiber käuflich erworbenen Lizenzen.

Hierbei empfiehlt es sich, dass der Lizenzmanager beim Erzeugen der Lizenzbestätigungsinformation eine Lizenzreferenzdatenbasis verwendet, in welcher Referenzinformationen, die jeweils Betreibern von Vermittlungseinrichtungen zugeordnete Referenzinformationen enthalten, gespeichert sind. Dies erleichtert nicht nur die Verwaltung von Lizenzen, sondern ermöglich auch, dass beispielsweise für Großkunden Lizenzen in einem "Lizenzpool" verwaltet werden können. Dadurch können im "Lizenzpool" befindliche, bezahlte, aber nicht genutzte Lizenzen flexibel dem aktuellen Bedarf des Kunden zugeordnet werden.

In einer bevorzugten Ausgestaltung ist vorgesehen, dass die Lizenzinformation eines zu konfigurierenden Softwaremoduls in den vom Betreiber erworbenen Lizenzen enthalten ist, ein Lizenzbestätigungsinformation erzeugt wird, welche in der Vermittlungseinrichtung den Dauerbetrieb des Softwaremoduls autorisiert.

In einer weiteren bevorzugten Ausgestaltung ist vorgesehen, dass für den Fall, dass die Lizenzinformation eines zu konfigurierenden Softwaremoduls nicht in den vom Betreiber erworbenen Lizenzen enthalten ist, eine Lizenzbestätigungsinformation erzeugt wird, welche in der Vermittlungseinrichtung während einer vorgegebenen Zeitdauer einen Testbetrieb des Softwaremoduls autorisiert.

Günstig ist, wenn die Kommunikationsverbindung zwischen der Vermittlungseinrichtung und dem Lizenzmanager über ein leitungsvermittelndes und/oder paketvermittelndes Kommunikationsnetz geführt wird. Dadurch ist die Vermittlungseinrichtung durch automatisch ablaufende Schritte fernadministrierbar bzw. fernkonfigurierbar.

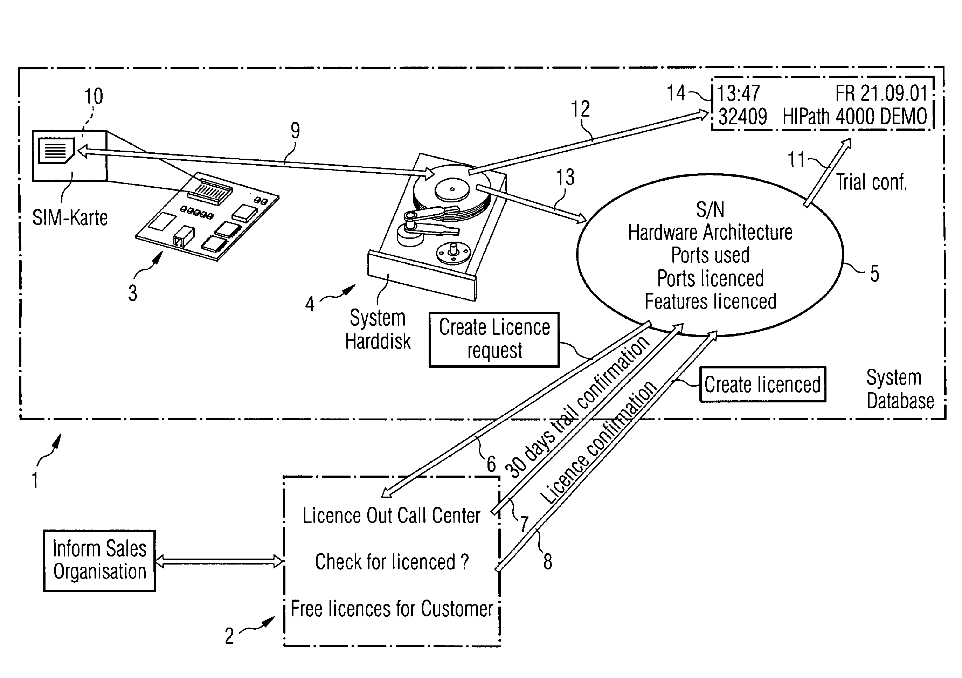

### Kurzbeschreibung der Zeichnung

Die Erfindung wird nachfolgend in beispielhafter Weise unter Bezugnahme auf die beigefügte Zeichnung erläutert.

Die einzige Figur zeigt schematisch ein Szenario einer Lizenzierung und/oder Zugangsautorisierung von Softwaremodulen einer rechnergesteuerten Vermittlungseinrichtung.

### Ausführung der Erfindung

Die Figur zeigt eine Vermittlungseinrichtung 1, die über eine durch Pfeile 6,7,8 angedeutete Kommunikationsverbindung mit einem Lizenzmanager 2 kommuniziert. In der Vermittlungseinrichtung 1 ist mit dem Bezugszeichen 4 eine Lizenzdatenbasis ("System Harddisk") bezeichnet, welche Teil einer Systemdatenbsis 5 ist. Der Harddisk 4 ist ein computerlesbaren Datenträger 3 zugeordnet. Dieser Datenträger 3 ist als SIM-Karte 10 ausgeführt. Sie ist steckbar in einer Leseeinrichtung, einer sogenannten SSU-Einheit (Security Service Unit) auf einer Leiterplatte der Vermittlungseinrichtung angeordnet. Bei einem Ausfall der Leiterplatte ist es möglich, die SIM-Karte auf einer neuen Leiterplatte weiter zu verwenden. Der Funktionsumfang des Kontrollers auf der SIM-Karte entspricht etwa dem von SIM-Karten wie sie bei Bankkarten Verwendung finden. Auf der Leiterplatte ist der SIM-Karte ein Kontroller ( z.B. vom Typ TDA 8007) zur Ansteuerung der Karte zugeordnet. In der Lizenzdatenbasis 4 befinden sich die Softwaremodule, welche Leistungsmerkmale der Vermittlungseinrichtung repräsentieren.

Für die folgende Beschreibung des Verfahrensablaufs, sei zunächst davon ausgegangen, dass die Lizenzdatenbasis 4 der Vermittlungseinrichtung 1 zwar sämtliche Softwaremodule enthält, die für eine volle Leistungskapazität der Anlage erforderlich sind, aber aktuell nur jene Softwaremodule zum Einsatz kommen, die der Betreiber der Vermittlungseinrichtung 1 vom Hersteller der Vermittlungseinrichtung lizenziert hat.

Um die Ausbaukapazität der Vermittlungseinrichtung zu erweitern und an einen gewachsenen Bedarf anzupassen, wird seitens des Betreibers wenigstens ein nicht lizenziertes Softwaremodule aktiviert. Diese Aktivieren löst zunächst eine Interaktion zwischen der Lizenzdatenbasis 4 und dem Datenträger 3 aus. (Diese Interaktion ist in der Zeichnung durch den Pfeil 9 angedeutet.) Ziel dieser Interaktion 9 ist es, zu prüfen, ob die System-Harddisk 4 zu einem auf dem Datenträger 3 vorhandenen geheimen Schlüssel passt. Das Ergebnis dieser Identitätsprüfung ist eine Hardwarekenninformation, aus welcher hervorgeht, ob der Schlüssel und die Speicherhardware als zueinander passend erkannt wurden.

Ist dies der Fall, wird in einem darauffolgenden Schritt (Pfeil 13) eine entsprechende Hardwarekenninformation erzeugt und diese zusammen mit der Lizenzinformation des zumindest einen Softwaremoduls vom Vermittlungsrechner 1 über eine Kommunikationsverbindung 6 an den von der Vermittlungsstelle 1 örtlich entfernt liegenden Lizenzmanager 2 übermittelt. Im Lizenzmanager 2 wird in einer Lizenzreferenzdatenbasis nachgefragt, ob der identifizierte Betreiber berechtigt ist, das gewünschte ggf. bereits konfigurierte Softwaremodul in seiner Anlage zu nutzen. Ist der Benutzer aufgrund einer bestehenden Lizenzvereinbarung berechtigt, entscheidet der Lizenzmanager 2 über die Autorisation des zumindest einen zu konfigurierenden Softwaremoduls in der Vermittlungsstelle 1, indem er eine Lizenzbestätigungsinformation (in der Zeichnung "License Confirmation") erzeugt und diese an die Vermittlungseinrichtung 1 rückübermittelt. (Die Rückübermittlung ist in der Zeichnung durch den Pfeil 8 dargestellt.) Die Anwendungssoftware der Vermittlungseinrichtung 1 ist dadurch hinsichtlich ihres Leistungsumfangs, dem Lizenzrahmen entsprechend, angepasst.

Hat hingegen der Benutzer nicht die Lizenz für die gewünschte ggf. bereits neu konfigurierte Ausbauversion der Vermittlungseinrichtung 1, so erzeugt der Lizenzmanager eine von der oben genannten abweichende zweite Lizenzbestätigungsinformation (in der Zeichnung als "30 days trial confirmation" bezeichnet). Auch im vorliegenden Fall wird diese zweite Lizenzbestätigungsinformation an die Vermittlungseinrichtung 1 rückübermittelt. (Die Rückübermittlung ist in der Zeichnung durch den Pfeil 7 dargestellt.) Wie der Pfeil 11 ("Trial confirmation") andeutet, führt diese Informationsübermittlung in der Vermittlungseinrichtung 1 dazu, dass die gewünschte Ausbaukapazität nicht dauerhaft sondern nur probeweise, beispielsweise für einen bestimmten Zeitraum, im vorliegenden Beispiel für 30 Tage, freigeschaltet wird.

Ein Probebetrieb wird auch in dem Fall freigegeben, wenn der Schlüssel und der Speicher als nicht zu einander passend erkannt werden. Dies ist in der Zeichnung durch den Pfeil 12 angedeutet.

Der Probebetrieb kann am Display eines Teilnehmerendgerätes dargestellt werden. In der Zeichnung ist dies beispielhaft durch das Feld 14 schematisch dargestellt. Es zeigt: die aktuelle Uhrzeit "13:45", das aktuelle Datum "21.09.01", den Typ der Anlage "HiPath4000", die eigene Rufnummer "32409" sowie die Kennzeichnung "DEMO". Aus der Kennzeichnung "DEMO" geht hervor, dass dieses Leistungsmerkmal nicht dauerhaft, sondern nur für Testzwecke freigeschaltet ist.

## Patentansprüche

1. Verfahren zur Lizenzierung und/oder Zugangsautorisierung für Softwaremodule in einer rechnergesteuerten Vermittlungseinrichtung, **dadurch gekennzeichnet,**
**dass** eine Lizenzdatenbasis verwendet wird, in welcher die Softwaremodule und jeweils diesen zugeordnete Lizenzinformationen gespeichert sind,
**dass** eine Konfiguration zumindest eines dieser Softwaremodule eine Interaktion zwischen der Lizenzdatenbasis und einem computerlesbaren Datenträger auslöst, wobei eine Hardwarekenninformation erzeugt wird,
**dass** die Hardwarekenninformation und die Lizenzinformation des zumindest einen Softwaremoduls vom Vermittlungsrechner über eine Kommunikationsverbindung an einen von der Vermittlungsstelle örtlich entfernt liegenden Lizenzmanager übermittelt wird, und
**dass** der Lizenzmanager eine Lizenzbestätigungsinformation erzeugt und diese an den Vermittlungsrechner rückübermittelt, wobei die Lizenzbestätigungsinformation im Vermittlungsrechner über die Autorisation des zumindest einen Softwaremoduls entscheidet.

2. Verfahren nach Anspruch 1, **dadurch gekennzeichnet, dass** bei der Interaktion zwischen der Lizenzdatenbasis und dem computerlesbaren Datenträger ein kryptographischer Algorithmus verwendet wird.

3. Verfahren nach Anspruch 1 oder 2, **dadurch gekennzeichnet, dass** bei der Interaktion zwischen der Lizenzdatenbasis und dem computerlesbaren Datenträger ein asymmetrisches Verschlüsselungsverfahren verwendet wird.

4. Verfahren nach einem der Ansprüche 1 bis 3, **dadurch gekennzeichnet, dass** als computerlesbarer Datenträger ein portabler Datenträger verwendet wird.

5. Verfahren nach einem der Ansprüche 1 bis 4, **dadurch gekennzeichnet, dass** als portabler Datenträger eine Smart-Card, eine Chip-Card oder eine SD/Multi-Media-Card verwendet wird.

6. Verfahren nach einem der Ansprüche 1 bis 5, **dadurch gekennzeichnet, dass** die Hardwarekenninformation und die Lizenzinformationen vom Vermittlungsrechner an den Lizenzmanager verschlüsselt übermittelt werden.

7. Verfahren nach einem der Ansprüche 1 bis 6, **dadurch gekennzeichnet, dass** der Lizenzmanager als Server realisiert ist und über ein Kommunikationsnetz mit der Vermittlungseinrichtung vernetzt ist.

8. Verfahren nach einem der Ansprüche 1 bis 7, **dadurch gekennzeichnet, dass** der Lizenzmanager beim Erzeugen der Lizenzbestätigungsinformation eine Lizenzreferenzdatenbasis verwendet, in welcher Referenzinformationen, die jeweils Betreibern von Vermittlungseinrichtungen zugeordnete Referenzinformationen enthalten, gespeichert sind.

9. Verfahren nach Anspruch 8, **dadurch gekennzeichnet, dass** jede Referenzinformation die von einem Betreiber käuflich erworbenen Lizenzen von Softwaremodulen beinhaltet.

10. Verfahren nach Anspruch 7 und 8, **dadurch gekennzeichnet, dass** für den Fall, dass die Lizenzinformation eines zu konfigurierenden Softwaremoduls in den vom Betreiber erworbenen Lizenzen enthalten ist, ein Lizenzbestätigungsinformation erzeugt wird, welche in der Vermittlungseinrichtung den Dauerbetrieb des zumindest einen Softwaremoduls autorisiert.

11. Verfahren nach Anspruch 7 und 8, **dadurch gekennzeichnet, dass** für den Fall, dass die Lizenzinformation eines zu konfigurierenden Softwaremoduls nicht in den vom Betreiber erworbenen Lizenzen enthalten ist, ein Lizenzbestätigungsinformation erzeugt wird, welche in der Vermittlungseinrichtung während einer vorgegebene Zeitdauer einen Testbetrieb des zumindest einen Softwaremoduls autorisiert.

12. Verfahren nach einem der Ansprüche 1 bis 11, **dadurch gekennzeichnet, dass** die Kommunikationsverbindung zwischen der Vermittlungseinrichtung und dem Lizenzmanager über ein leitungsvermittelndes und/oder paketvermittelndes Kommunikationsnetz geführt wird.
